# EUROPEAN PATENT APPLICATION

(11) **EP 4 764 754 A1**
(43) Date of publication of application: **24.06.2026**
(21) Application number: 24221657.0
(22) Date of filing: 19.12.2024
(51) Int. Cl.: G05B 23/02, G06F 30/15, G06F 30/23, G06F 30/27, G06F 119/04, G06F 119/02

(54) **PREDICTING MACHINE BEHAVIOUR**

(71) Applicant: Romax Technology Limited, Cobham KT11 1HY (GB)
(72) Inventor: James, Barry, Cobham, KT11 1HY (GB)
(74) Representative: Kaminski Harmann

(57) **Abstract**

The invention pertains to a computer-implemented method (100) for predicting behaviour of one or more machines of a plurality of nominally identical machines, wherein the method comprises providing (110) a digital twin for each of the machines, each digital twin comprising a meta model, the method further comprising a prediction process comprising providing (120), to each meta model, input parameters regarding at least operating and environmental conditions and/or properties of the respective machine, generating (130), by each meta model and based on the respective input parameters, a final output, and predicting (140) the behaviour of each machine based on the final output of the respective meta model, wherein the method comprises monitoring (150) the behaviour of machines of the plurality of nominally identical machines, determining (160) whether a relationship between the actual behaviours and the predicted behaviours is within a predefined threshold, if the relationship is not within the threshold, adapting (170) values of one or more of the input parameters and/or adapting (180) the meta model, wherein the prediction process is repeated with the adapted values and/or the adapted modules, and providing (190), if the relationship is within the threshold, the predicted behaviours of at least a subset of the plurality of systems to a user or to a maintenance scheduling system.

## Description

The present invention pertains to a computer-implemented method for predicting a behaviour of a machine or other physical asset, for instance for predicting the durability or failure of a gearbox. According to certain embodiments of the invention, multiple physics-based models of the same phenomenon (e.g., failure) compete with one another to give the best match between prediction and observation for a fleet of machines, wherein the models with the best match are selected for further use.

It is known to perform fleet management of a multitude of nominally identical machines, wherein a digital twin is provided for each individual machine. Using the digital twin, fatigue and hence reliability of the machine may be predicted based on environmental and operating conditions. The digital twin exists alongside the physical machine during its life and predicts when the machine is going to fail. For the fleet, the observed and predicted reliability are observed, and the prediction is regularly updated so that it matches the observation. For instance, EP 4 290 432 A1 discloses the use of a digital-twin database comprising individual digital twins for each of a multitude of coordinate measuring devices to determine maintenance requirements for the devices.

EP 4 163 740 A1 discloses updating digital twins of a tooling machine based on measurements performed on workpieces produced by these tooling machines. Model updating is an example of where the properties of a Finite Element model are updated based on measurements obtained from testing a physical specimen. It is known to provide a digital twin of a machine based on physics. Physics is causation that has been identified a priori, wrapped up as maths, which gets developed into a model of the machine that is run as a simulation. Physics is important since it explains how a machine performs and can be used to predict such performance based on the machine parameters and environmental and operating conditions, whether the machine exists or not. Normally, detailed physics simulations are deployed during the design of the machine, but here there is no physical asset with which to twin and from which condition data can be recorded. Whereas design digital twins are based on pure physics, operational digital twins incorporate some data, at least in regard to measured Environmental and Operating Conditions. These different kinds of digital twins built for different purposes. It is also known to use meta models (models based on more complex physics models) in operational digital twins. These can be reduced-order models (ROMs) or surrogate models (SMs). Physics-based simulations are slow and often run slower than 'real time'. Therefore, a surrogate model is created by running the simulation off-line many times, with different input parameters, then deriving a statistical relationship between inputs and outputs. This statistical relationship becomes the SM - it gives the same input-output relationship, but without actually calculating (or even considering) the actual physics and is typically much faster. The statistical relationship can be achieved through simple look-up tables, linear regression, multi-variant regression, machine learning and artificial intelligence (AI), which are all considered as similar methods of gradually increasing complexity.

Sometimes, physics-based simulations are deployed during the design of the machine, when the machine does not (yet) exist, to inform the designer as to the predicted performance of the machine in operation, based on anticipated Environmental and Operating Conditions (E&OC). This is known as a 'design twin' and is commonly developed into products that are known as Computer Aided Engineering (CAE). However, since there is no actual physical machine for the digital asset to twin to, this is often ruled to be outside of the scope of the digital twin. Rather a digital twin should be a digital asset that twins with and exists alongside a physical asset (machine), based on actual E&OC.

With the emergences of the Internet of Things (IoT), data on machine operation (i.e., including E&OC) is becoming ever more available, and thus digital twins become more feasible. E&OC can be used and fed into a digital twin (DT) of a machine in operation to predict the likely outcome in terms of behaviour, e.g. reliability, or any other aspect of performance. Often, a CAE model used for design of the machine cannot be redeployed as the DT to simulate the in-service behaviour of the same machine in real time, since physics for designing machines (i.e., CAE) has targeted greater complexity/nuance in its insight, which leads to time-consuming computation.

In the world of Digital Twins, a prediction might not perfectly match observation. The IoT increasingly provides a wealth of data regarding the performance of machines, including the same characteristic of machine performance that is predicted by the digital twin, plus the E&OC that impacts on the machine and leads to that performance. Situations arise where the observed outcome (measured data) is different from the predicted outcome (from the simulation). In these situations, a feedback loop can be deployed in order that the prediction can be adjusted to match the observation.

There are DT applications in which CAE models or ROMs are deployed to predict the behaviour of machines as well as application builders that allows them to be linked together to create real time applications. In each case, a feedback loop allows convergence between the observed and predicted data. This can take place for CAE models and ROMs.

Sometimes this is not enough because even once the prediction has been adjusted there is a residual error between the prediction and the observation. This error can be used to create an SM that covers the remaining gap between observation and prediction and gets added to the output of the simulation. It does not attempt to explain the gap or propose alternative physics that might give a better match. When this convergence between observation and prediction is being attempted, the same framework of physics may be used. This means, whether at the overall level of the physics or in terms of some detailed aspect of the machine behaviour, the same equations are being used to explain the causal behaviour described by the physics, simply with input parameters to these equations being adjusted.

Often, this is deemed satisfactory, and once a model has been shown to have some use, it gets re-used reflecting upon new evidence on the basis of that model only.

Predictions based on physics are useful because physics represents codified a priori knowledge on the operation of a machine that allows predictions on the behaviour of machines that do not yet exist, and comparisons between machines that are similar in nature but designed to different specifications.

Whilst it is possible that the physics algorithms proposed may be the best, it is also possible that alternatives exist which are better. Yet these never get a chance to be proven because laboratory test data is expensive, it only ever provides a limited number of test samples, and it always gets used to reinforce the usage of the pre-existing algorithms. For instance, Miner's rule is a well-known and convenient approach to model fatigue damage and the equations regarding gear stress are embodied in the internationally accepted standard of ISO 6336, although alternative models might exist that match the respective test data more closely. Also, there are areas in the standards that fail to account for the usage of machines in practice. An example of this is Kappa (K), the viscosity ratio that is used in the calculation of bearing life in ISO 281. It is the ratio between the film thickness and the surface roughness, so when this drops the lubrication regime will change. Manufacturers of heavy machinery have highlighted that the standard does not account for operating conditions that are commonly seen in their machines.

Some predictions may contain a lot of physics (i.e. a-priori knowledge of the causal operation and behaviour of the machine) and only a small amount of adjustment based on evidence; others may contain only a little a-priori understanding of how the machine operates and rely a lot on observation. But they are both digital twins, models of how the machine operates that are intended to yield understanding regarding its performance/behaviour. The fact that the digital twin can contain varying amounts of a priori knowledge and observed behaviour gives rise to the concept of a flexible DT, where the balance between physics and data is flexible. The balance between physics and data can be taken along way.

In an approach that solely relies on Big Data and the Internet of Things (IoT) to collect data, and artificial intelligence (AI) or machine learning (ML) to derive patterns hidden in that data, i.e. without involvement of any physics-based simulations, several problems may arise.

A first problem is that for each type of machine, one design is followed by a different design a few years later, i.e. a design that should be better and should reflect the changing market demands. Therefore, if a large sample of machines in one generation has been monitored, observed, and all the outcomes identified and number-crunched using AI/ML, this may be of no use if the design of a next generation responds to the E&OC in a different way owing to the different design specification.

A second problem is related to 'Resnikoff's conundrum', which essentially states that if a failure mode is catastrophic then, by definition, the machine will have to have been designed to make this failure mode very rare and thus there will be little or no data regarding the failure mode. In-service helicopter gearbox failures are a good example - any actual failure is likely to lead to several fatalities, so this failure is very rare.

A third problem is one of interpretation. Physics helps 'explaining' to the engineer how the universe (including machines) works. Engineering involves understanding how to achieve a set of conflicting objectives and this requires engineers to understand and trade-off these conflicts. Even if an AI/ML model accurately describes the relationship between input and output, it is a `black box' and does not provide the interpretability that a physics-based equation does.

A fourth problem is related to error spotting. It could be that the AI/ML analysis has been carried out correctly and the resulting model is accurate. On the other hand, it is possible that an important parameter has been missed out. Without interpretability, it is impossible to carry out a 'sense-check' on the resulting model.

Thus, physics retains its appeal and usefulness - the ability to understand/explain how a machine works, to break its function down into causal behaviour and provide mathematical relationships that provides a priori knowledge about the design and operation of machines and allows learning to be transferred from one design of a machine to another design with a different specification. For example, if a given gear material fails after a given number of cycles at a given stress, this should be the same for a passenger car, truck or wind turbine so long as they use the same material subject to the same processing. In general, as data and physics are mixed, the more the model is based on physics the better.

This presents a dilemma for engineers - on one hand they are constrained to keep using physics-based models that are a priori, i.e. have been developed and shown to be useful by previous generations of engineers. On the other hand, they see that vast quantities of data are being harvested from in-service machines and the suggestion is to do away with physics-based models altogether and rely on AI/ML. There is a clear need for an alternative - the potential to utilise the abundance of data plus the computational power of AI/ML and to be able to either confirm/update existing physics models or identify and validate new physics models, according to the evidence.

It is an object of the present invention to provide an improved method for predicting behaviour of a machine or similar asset.

It is a particular object to provide such a method wherein the behaviour is or comprises failure.

It is another particular object to provide such a method wherein the behaviour is predicted in real time.

At least one of these objectives is achieved by the computer-implemented method of claim 1, the digital twin of claim 13, and/or the dependent claims of the present invention.

A first aspect of the invention pertains to a computer-implemented method for predicting behaviour of one or more machines of a plurality of nominally identical machines. The machines - e.g., mechanical load transmitting machines or gearboxes - are exposed to mechanical stress and the behaviour is effected at least partially by the mechanical stress. For instance, load transmitting machines may experience mechanical stress as a result of external or internal loads through heat or acceleration. For instance, the behaviour may be or comprise failure of the machine or a component thereof.

The method comprises providing a digital twin for each of the machines, each digital twin comprising a meta model, the meta model being one of a reduced-order model and a surrogate model. The method further comprises a prediction process and an adaptation process. The prediction process comprises:
- providing, to each meta model, input parameters regarding at least operating and environmental conditions of the respective machine, or properties of the machine;
- generating, by each meta model and based on the respective input parameters, a final output; and
- predicting the behaviour of each machine of the plurality of machines based on the final output of the respective meta model.

The method further comprises monitoring the behaviour of machines of the plurality of nominally identical machines. The adaptation process comprises determining whether a relationship between the actual behaviours and the predicted behaviours is within a predefined threshold, and, if the relationship is not within the threshold, adapting values of one or more of the input parameters and/or adapting the meta model. The prediction process is then repeated with the adapted values and/or the adapted meta model. Finally, the method comprises providing, if the relationship is within the threshold, the predicted behaviours of at least a subset of the plurality of systems to a user or to a maintenance scheduling system.

According to some embodiments of the method, the meta model comprises a plurality of sequentially arranged modules that have been created by different physics-based models. The adaptation process comprises (if the relationship is not within the threshold) at least adapting the meta model, wherein adapting the meta model comprises adapting at least one of the sequentially arranged modules, and the prediction process is repeated with the adapted modules.

According to some embodiments, adapting at least one of the sequentially arranged modules comprises exchanging one or more of the modules of the meta model by an interchangeable module version that is created using a different physics-based model. For instance, exchanging the one or more of the modules may be performed by an artificial intelligence based on the relationship between the actual behaviours and the predicted behaviours, e.g., using a fitness function.

According to some embodiments of the method, the different physics-based models for creating the modules comprise at least a subset of ISO 6336, ISO 281, Finite Element Analysis, Loaded Tooth Contact Analysis and a micro-structure-based fatigue simulation.

According to some embodiments of the method, the input parameters comprise a nominal or measured dimension of one or more components of the machine, such as a nominal or measured micro-geometry of a gear.

According to some embodiments of the method, the plurality of sequentially arranged modules includes a first module, a last module and one or more intermediate modules, each module being configured to receive input and to generate output based on the received input. In these embodiments the method comprises, for each machine of the plurality of machines, providing a first set of parameters as input to the first module to generate first output, providing the first output and a second set of parameters to an intermediate module to generate intermediate output, and providing intermediate output as input to the last module to generate the final output. Adapting the input parameters then comprises adapting at least one of the first set of parameters and the second set of parameters.

In some embodiments, the plurality of sequentially arranged modules includes at least two intermediate modules, wherein the first output and the second set of parameters are provided to a first intermediate module to generate first intermediate output. In one embodiment, the plurality of sequentially arranged modules includes (exactly) two intermediate modules, the method comprises providing at least the first intermediate output as input to a second intermediate module to generate second intermediate output, and the second intermediate output is provided as input to the last module to generate the final output. In another embodiment the plurality of sequentially arranged modules includes *n* intermediate modules, where *n* > 2, and the method comprises providing to each of the further intermediate modules at least the output of the respective previous intermediate module as input to generate a respective intermediate output, wherein the *n*^{th} intermediate module generates the intermediate output that is provided as input to the final module.

In some embodiments, the machines are gearboxes, the first set of parameters comprises at least one of speed, temperature and torque, the first output is a misalignment, and the second set of parameters comprises at least one of slope, crowning and barrelling, particularly wherein the second set of parameters also comprises torque.

In some embodiments, the behaviour of the machine is or comprises failure of the machine, the intermediate output provided as input to the last module is related to stress, and the final output is related to an estimated damage to the machine.

According to some embodiments of the method, the prediction process and the adaptation process are reiterated until it is determined that the relationship between the monitored behaviours and the predicted behaviours is within the pre-defined threshold, e.g., until it is determined that the predicted behaviours match the monitored behaviours.

According to some embodiments of the method, determining whether the relationship is within the predefined threshold comprises determining whether the predicted behaviours match the monitored behaviours, wherein the values of the input parameters are adapted, and the prediction process is repeated if the predicted failures do not match the monitored behaviours.

According to some embodiments of the method, determining whether the relationship is within the predefined threshold comprises performing a Weibull analysis.

According to some embodiments of the method, the behaviour of the machine is or comprises a failure of the machine, the final output is related to an estimated damage of the respective machine - e.g., wherein the estimated damage is derived using Miner's rule -, monitoring the behaviour of machines of the plurality of nominally identical machines comprises monitoring the occurrence of actual failures of the machines, and the relationship between the actual behaviours and the predicted behaviours is a relationship between the actual failures and the predicted failures. In some embodiments, if the relationship between the monitored failures and the predicted failures is within the predefined threshold, the predicted failures of at least a subset of the plurality of machines are provided to a maintenance scheduling system, and a maintenance for one or more machines of the subset is automatically scheduled based on the provided predicted failures.

According to some embodiments of the method, the input parameters are adapted based on the relationship and to approach the monitored behaviours with the predicted behaviours.

According to some embodiments of the method, the machines are gearboxes, and the input parameters comprise at least one of speed, torque and temperature, particularly oil temperature, and at least one of lead slope, lead crowning, involute slope and involute barrelling. For instance, the input parameters may also comprise information about a duration of operation of the respective gearbox.

According to some embodiments of the method, the machines are electric machines, and the input parameters comprise at least one of speed, current and torque, and at least one of ambient temperature and thermocouple reading. For instance, the input parameters may also comprise information about a duration of operation of the respective electric machine.

A second aspect of the invention pertains to a digital twin of a machine. The digital twin comprises a meta model, i.e. either a reduced-order model (ROM) or a surrogate model (SM) and having a plurality of sequentially arranged modules being created by different physics-based models, wherein the plurality of sequentially arranged modules includes a first module, a last module and one or more intermediate modules, each of these modules being configured to receive input and to generate output based on the received input, the input comprising input parameters regarding at least operating and environmental conditions of the machine. The first module is configured to generate first output based on a first set of parameters, an intermediate module (i.e., in case of only one intermediate module, the intermediate module, and in case of more than one intermediate modules, a first intermediate module) is configured to generate intermediate output based the first output and a second set of parameters, and the last module is configured to generate the final output based at least on intermediate output (i.e., in case of only one intermediate module, input from the intermediate module, and in case of more than one intermediate modules, input from a last intermediate module). The digital twin is configured to perform an adaptation process, particularly the adaptation process of the method according to the first aspect of the invention. The adaptation process comprises determining whether a relationship between an actual behaviour and a predicted behaviour of the machine is within a predefined threshold, the predicted behaviour being predicted based on the final output, and, if the relationship is not within the threshold, adapting values of one or more of the input parameters and/or adapting at least one of the sequentially arranged modules to generate a different final output until the relationship between the actual behaviour and the predicted behaviour is within the threshold.

In some embodiments of the digital twin, the adaptation process comprises adapting at least one of the sequentially arranged modules, wherein adapting at least one of the sequentially arranged modules comprises exchanging one or more of the modules of the meta model by an interchangeable module version that is created using a different model, particularly a different physics-based model. For instance, exchanging the one or more of the modules may be performed by an artificial intelligence based on the relationship between the actual behaviour and the predicted behaviour, e.g., using a fitness function.

In the wording of this document, a digital twin according to the second aspect of the invention can be called a "mutating digital twin".

A third aspect of the invention pertains to a computer program product comprising program code having computer-executable instructions for performing the method accordingto the first aspect. The computer program product may be a non-transitory computer-readable medium having instructions stored thereon for performing the method.

Optionally, the computer program product may comprise the digital twins of the method according to the first aspect. For instance, some or all (at least a subset) of the digital twins may be configured as a digital twin according to the second aspect of the invention.

The invention in the following will be described in detail by referring to exemplary embodiments that are accompanied by figures, in which:
- Fig. 1: shows an exemplary embodiment of a vehicle, comprising components and generic sensors;
- Fig. 2: shows a digital twin of the vehicle of Fig. 1, the digital twin comprising additional sensors;
- Fig. 3: shows a simple reduced-order model for use with a digital twin;
- Fig. 4: shows the simple reduced-order model of Fig. 4 including a feedback loop;
- Fig. 5: shows an evolving digital twin for predicting failure;
- Fig. 6: shows a complex reduced-order model for predicting damage in a gear box;
- Fig. 7: is a table illustrating the progression by which a flexible digital twin
- Fig. 8: changes into a mutating digital twin; illustrates how to achieve the item in row 1 in the table of Fig. 7;
- Fig. 9: illustrates how to achieve the item in row 2 in the table of Fig. 7;
- Fig. 10: shows a complex reduced-order model for predicting failure of an electronic machine; and
- Fig. 11: is a flow chart illustrating an exemplary embodiment of a method according to the invention.

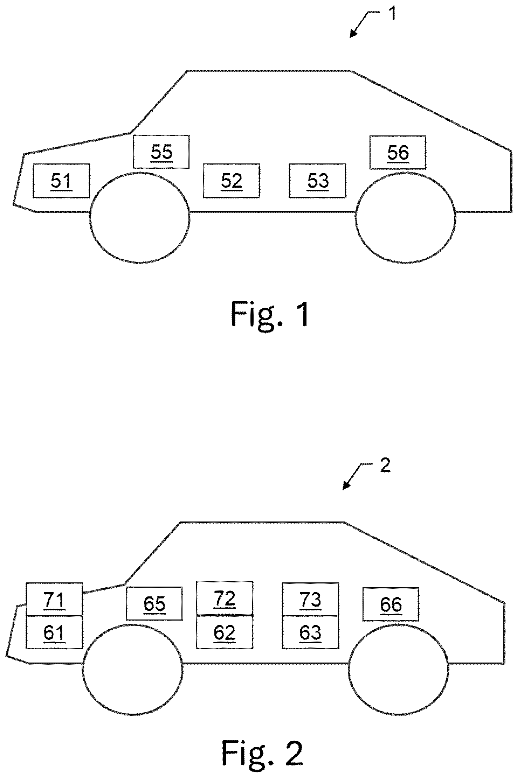

Figures 1 and 2 illustrate the use of virtual shock load sensors in the digital twin of a vehicle. This is disclosed in detail in the European patent application EP23218096.8. In the concept of "digital twins", the term 'twin' means that it mirrors and replicates the behaviour of the physical asset it represents, and the term `digital' means that it is computerised, a calculation or algorithm. Effectively, the digital twin is a function that describe causation between input and output to describe the behaviour of a represented machine, i.e. physics embodied in mathematical algorithms. The input comprises aspects of the operational and environmental conditions or properties of the machine that have an impact on the machine behaviour, in particular with respect to a behaviour of interest. The output comprises aspects of the machine behaviour, in particular the behaviour of interest, such as, e.g., the machine's reliability.

In each machine, the outcome is impacted upon by different operational and environmental conditions. The following list of exemplary operational and environmental conditions is not exhaustive, and some parameters are more influential than others:
- Gears: torque, misalignment, gear geometry, gear material fatigue strength, oil properties;
- Bearings: radial load (a function of applied torque in a gearbox), bearing geometry, misalignment, material properties, oil viscosity;
- Electric machines: temperature of windings, cycling from hot to cold, winding material, machine voltage;

- Power electronics: change from hot to cold, vibration, manufacturing quality of the welded joints;
- Suspensions: cyclic loading on the joint, material fatigue strength, moisture.

While the physics describing the reliability of a machine starts simple, it becomes more complex with each refinement. Some of the input-output relationships are quite simple, some are more complex. Preferably, the more complex relationships should be more accurate since they get to describe with greater nuance the physics-based behaviour of the machine. This means that the calculation method used in designing a machine (and implemented using CAE) ends up being computationally expensive.

Figure 1 shows an example of a vehicle 1. The depicted vehicle is a four-wheeled car comprising a set of components 51, 52, 53 comprising a gearbox of the vehicle. A digital twin needs data on the Environmental and Operating Conditions (E&OC) that cause the machine to degrade and fail. During the design phase, anticipated E&OC are used as input data for CAE to determine if the machine is fit for purpose, i.e. sufficiently reliable. This is typically based on studies of the operation of previous machines, possibly including instrumented test vehicles. It is well understood that whilst each vehicle of a certain type maybe nominally identical, in that they are all designed and made to the same specification, each vehicle will experience very different E&OC in its in-service life compared to other vehicles in the fleet.

During design, a test vehicle that is equipped with instruments and run under the most severe possible conditions (E&OC) may be used for the purposes of design and development testing on the basis that if the machine can withstand the harshest of conditions, it will be reliable for all normal users. However, the problem arises that the range of usage conditions in real life is so diverse that designing for the worst possible conditions risks 'over-design', where the machine is larger and more costly than is required and this cost is incurred for every machine manufactured, even if it experiences gentler operation conditions.

It has long been a challenge to know the actual operating conditions of machines. It is not possible to instrument every machine in volume manufacturing with strain gauges; however, cost effective solutions are increasingly available. In the instance of a gearbox, E&OC data for the purposes of fatigue simulation normally focusses on the drive torque that the primary power source delivers to the gearbox. This primary power source, often referred to as the prime mover in ground vehicles, will be the engine or electric motor. In wind turbines it will be the blades.

In a ground vehicle, the desired engine/motor torque is a function of the torque demand signal, normally set by the driver's accelerator pedal, according to the driving requirement. This demand signal is distributed through the vehicle via the Controller Area Network (CAN bus). One option to determine the actual driving conditions for each vehicle is to record this torque demand and use it for the simulation of gearbox fatigue in a digital twin. Thus, no additional instrumentation is needed. In addition to this, when the vehicle drives over bumps, shock loads may occur that deliver fatigue cycles to the gearbox that are in addition to and exceed the torque delivered by the prime mover. Driving over bumps will also cause fatigue cycles for a whole range of other components in the vehicle, such as suspension links, body panels, welds, and electronic components.

When the vehicle 1 runs over obstacles, bumps or holes in the ground, shock loads occur that may damage the components 51, 52, 53 and finally may lead to their failure. Vehicle components that typically are affected by shock loads include but are not limited to gears, bearings, suspension links, body panels, welds, and electronic components. The depicted vehicle 1 comprises a multitude of different sensors 55, 56 that provide their data to a Controller Area Network (CAN) of the vehicle for the purposes of the smooth and coordinated running of the vehicle. Since they are available in this communication network, they are also available for monitoring, processing and recording. These are generic, typically inexpensive sensors that measure parameters, such as accelerations or a vehicle speed, during operation of the vehicle for different purposes. In particular, these sensors 55, 56 comprise wheel speed sensors that generate wheel speed signals that are provided to an anti-lock brakingsystem (ABS) of the vehicle 1. The vehicle 1 does not comprise any shock load sensors, especially since shocks occur in different ways at different points in the vehicle and implementing corresponding sensors at every point in the vehicle would be very expensive.

Although the vehicle 1 is depicted here as a passenger car, the claimed invention may also be applied to other kinds of vehicles, e.g., buses, vans, lorries, trucks, construction vehicles, agricultural vehicles, motorcycles, airplanes etc. Also, the vehicle 1 may be a tracked vehicle, e.g. an armoured tracked vehicle or a bulldozer.

Figure 2 shows a digital twin 2 of the vehicle of Figure 1, the digital twin representing a physics-based model that also depicts dynamics and/or behaviour of the vehicle. It can also describe changes to the vehicle and its components during operation such as fatigue and wear. Being a copy of the individual vehicle, the digital twin 2 comprises virtual components 61, 62, 63 that are digital representations of the vehicle's components, as well as digital sensors 65, 66 that are digital representation of the vehicle's generic sensors and are configured for generating virtual generic data during a simulation. It also comprises the properties of the vehicle and specifically the path that the shock loads will take through the vehicle as they travel from the road surface, through the tyres, through the vehicle to the virtual components 61, 62, 63. Additionally, at each of the virtual components 61, 62, 63 a digital shock load sensor 71, 72, 73 is provided that is configured for generating virtual shock load data during a simulation. The digital shock load sensors 71, 72, 73 have no counterpart in the actual vehicle. Further digital sensors that have no counterpart in the actual vehicle may be added, for instance for measuring weld stresses.

Using virtual sensors such as the virtual shock load sensors described above, failures in plurality of nominally identical machines (e.g., gearboxes) may be tracked to predict failure of each individual machine, based on the actual loading encountered in service for that machine, rather than the anticipated loading that was assumed during the design process.

In the context of the present invention, different kinds of digital twins need to be distinguished. A flexible digital twin (FDT) can adjust the balance between data and physics to achieve an improved performance of the digital twin. Such a digital twin can also 'evolve', meaning it self-corrects, but remains with the same structure and is based on the same physics (evolving digital twin, EDT). Such a digital twin can mutate (mutating digital twin, MDT), in that, wherever a physics-based model is, different models can be run in competition, and the MDT identifies the best performing model based on best match between observation and prediction.

If a digital twin is provided for every machine in the fleet, insight may be aggregated from all these digital twins. This aggregated insight can be used as feedback to the digital twin and the refined digital twin provided to the design process of the next generation of such machines. This feedback can be in the form of more accurate loading data (E&OC), including variations in loading based on application or territory. In addition, as failures in the fleet start to occur, the prediction of fatigue/reliability can be compared with the observed reliability - updates to the reliability prediction can be made such that the prediction matches the observation. In an evolving digital twin such updates will be made using the pre-existing physics-based model for the machine for stress, damage and reliability. However, with a mutating digital twin, alternative physics-based models may be proposed and tested.

One aspect of the invention pertains to a fleet-management digital twin for reliability that delivers 'maximised confidence'. Such a fleet-management digital twin can be applied to any machine and predicts the fatigue and hence reliability of the machine based on operating conditions. It sits alongside the physical machine during its life and predicts when it is going to fail. Having lots of nominally identical machines, the prediction of failure cannot be compared with the actual time of failure for an individual machine, but collectively it makes sense. For the fleet, the comparison of the observed and the predicted reliability is used to update the prediction so that it matches the observation. Such a digital twin is an evolving digital twin (EDT).

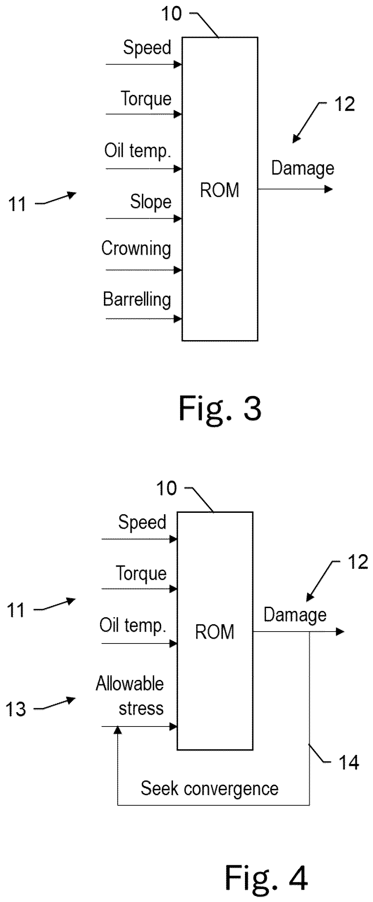

Figures 3 and 4 illustrate the use of a simple reduced-order model (ROM) 10 with a digital twin. To have the simulation running faster than elapsed time is called running in 'real time'. In real life, environmental and operational conditions change quickly, faster than the speed of the computation. Usually, these changes mean that the CAE calculation cannot keep up with 'real time', and CAE requires too large a computer to run such calculations for every machine in real time. In orderto make a digital twin work in real time, it is possible to use a "meta model", i.e., a model of a model. The meta model is not the most complete model of the machine but does the same job more quickly and/or with less computational effort. The meta model can be created using either a ROM 10 or a surrogate model (SM).

CAE can be understood as the most complete representation of the physics of a machine deployed by engineers during design, ROMs as any physics-based model derived from a simplification of that CAE model, and physics-based SMs as surrogate models derived from training data that has been created by multiple runs of a CAE model or ROM.

A ROM uses model order reduction, i.e. reduces the order of the mathematics of the governing equation. This can include but is not limited to methods such as proper orthogonal decomposition, state-space, electrical circuit equivalent, singular value decomposition, and modal response. Thus, the physics that describes the behaviour of the machine is retained, but in a simplified manner. A surrogate model (SM) is data-driven, i.e., the inner working of the simulation is assumed to be unknown, and the model relies solely on the input-output behaviour. The SM is created from training data. Then, statistical methods (e.g., regression, look-up tables, polynomial fits, machine learning) are used to create a relationship between input and output, which can be executed. This training data can be derived from observation (i.e., measurements) or from the heavyweight physics-based calculations of CAE. In the latter case, the same causal behaviour of the physics can be represented in the input-output relationship with most of the detailed computational effort excluded. Thus, meta models are ways of making models run faster and with less computation, either by simplifying the physics (ROM) or replacing the physics by a model that represents the behaviour but does not attempt to explain the physics (SM).

Whatever method is being used in CAE, there will always be an error or simplification compared to the physical world, based on some sort of observation. For example, Finite Element analysis may be used for structural analysis (structures under load), yet it does not 'fully' simulate the physics of the structure under load; it does not simulate down to the inter-atomic forces, rather it uses the 'simplified' model represented by elastic behaviour of materials plus Young's Modulus and Poisson's ratio. Computational Fluid Dynamics, being one of the most computationally expensive simulation methods deployed by engineers, uses pre-defined turbulence models, plus viscosity and density that are measured for each fluid. Multi-body dynamics uses stiffness (from Young's Modulus) and damping, both of which are derived from observations and simplifications. Thus, even the 'full physics' calculations are a combination of simplified physics (ROMs) and observed data (SMs).

Physics could therefore be described as experimentally observed behaviour that gets identified as a pattern and either codified into mathematics that can be applied generally or represented by constants that help calibrating the behaviour of the observable world. The codified pattern helps explain how the world works and is effectively a ROM of the world; the constants are observation-based SMs that allow achieving a match between prediction and observation. All physics-based models include some element of observed data. Similarly, engineering simulations are a combination of causal behaviour that aims to explain and predict machine performance, plus some observed data to make the prediction accurate. A trade-off takes place: if the physics-based model does not provide the insight needed by engineers then it will be refined (e.g., made more complex) until it does. This comes with the cost of being harder to understand and longer to compute, and each subsequent step would provide diminishing returns in terms of increasing accuracy and insight, to the point where the reduction in simulation speed becomes prohibitive and no further refinement takes place.

In the example shown in Figure 3, the ROM 10 uses several inputs 11 to produce a single output 12. The shown digital twin is that of a gearbox, and the inputs 11 comprise measured values for a speed, a torque, and an oil temperature, as well as for lead slope, lead crowning, involute slope and involute barrelling. The output 12 is the estimated damage to the gearbox.

The use of a Flexible Digital Twin (FDT) allows digital twins to be created with varying amounts of physics and data. Recognising that a Flexible Digital Twin can include some observation-based content, the evolving digital twin (EDT) can be created by using the observation to update the prediction. In case of a Mutating Digital Twin (MDT), the digital twin is again an FDT, built with some physics-based and observation-based content to provide predictions of how the machine will perform. However, alternative physics-based and statistical-based models are inserted and run alongside in the prediction of the machine behaviour. The performance of these models (output values) is compared against actual machine performance. Based on the accumulation of evidence from the machine, or fleets of similar machines, the best performing physics model are identified and substituted into the digital twin ahead of the worse performing models.

When new solutions are created for the MDT, AI is used to identify correlations and back them up with causal modelling, e.g., replacing parameters with partial models. This allows a competition of parallel modelling - either at the level of the entire machine or subsystem. Data from a multitude of different machines may be used. The decision criterion is the difference between the predicted and actual failure rate, for instance using the Weibull distribution. Feedback may be provided via fitness function. Only part of the population survives, based either on a fixed threshold or number.

Similarly to predicting a behaviour of a gearbox as illustrated here, the behaviour of a vehicle chassis may be predicted. The structure of a ground vehicle, known as the chassis, can take different forms in the different types of ground vehicles, but in general it is required to take the structural loads without failure, but at the same time it should not be over designed. 'Failure' can take various forms - it is not normal for instantaneous and catastrophic fracture to take place, rather yield takes place locally, leading to a gradual 'unzipping' of the structure as the load sharing changes and the structure deforms. Whilst the basic principles of linear stress analysis and conventional fatigue analysis can give an indication of the weakest points for failure and the time at which failure can start, it is likely that different models could be useful in providing insight into how vehicle structures fail. Thus, a self-correcting digital twin could be useful in these circumstances. As has been explained, this self-correcting mechanism could be achieved using an evolving digital twin, but it would be advantageous to have a mutating digital twin thereby identifying the validity of new physics-based models.

As illustrated in Figure 4, the simple ROM 10 (having input 11 and output 12 similarly to the ROM of Figure 3) can be set up to have the allowable stress 13 as an additional input to the ROM, with a feedback loop 14 that seeks to achieve convergence between prediction and observation.

In some instances, physical understanding is poor, and the digital twin has to rely more on evidence (e.g., from current condition and/or past data). Comparing and contrasting gears, electric machines and electronics, gears fail because of cyclic stress, electric machine fail because of time- and/or temperature-based degradation of the winding insulation, and electronics fail because of temperature cycling, mechanical stresses and other factors. Mechanical stress can also be induced by heat, i.e., heat causes expansion, which causes displacement and hence stress.

For gears, the physics of gear stress is quite well understood and there are pre-existing results for S-N curves for gear materials. Since lots of physics is available, comparatively little statistics is required. For electric machines, the basic physics is understood less, and there are insufficient or no pre-existing results for winding degradation for this to have made it into a codified standard such as for gears and bearings. However, one can expect that the relationships in the basic physics will reveal a consistent pattern if the data can be acquired and appropriate physics-based models used in the data processing. For electronics, a failure may occur because of several different reasons (thermal stress, thermal cycling, manufacturing errors, mechanical shocks), and separating these out is impossible - all that can be observed is a failed component. Therefore, in each of these cases the digital twin has comparatively less physics and more statistics. This highlights the need to be flexible, to be able to substitute in different causal models based on the evidence and to have as much physics as possible but accept that statistics has a role to play.

All physics-based models include some element of data derived from physical observation and are simplifications of reality and thus may be considered 'reduced order'. The complexity of the physics in any model may be extended (made with increased precision) and increased in order to try to match reality (achieve greater accuracy). Usually, an increase in complexity will lead to an increase in computational time. At some stage, any increase in accuracy will become offset by the increase in computational time, at which point the increase in complexity becomes disadvantageous. The "CAE" model is the most complex type of modelthat is used for engineering and is typically be used in research or design.

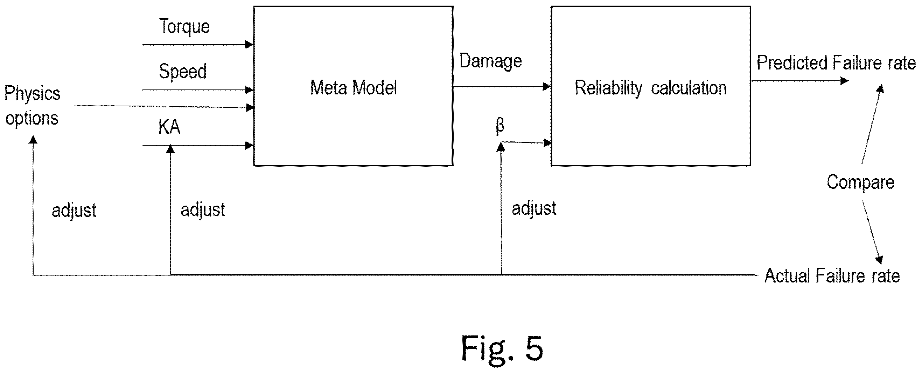

Figure 5 illustrates an EDT for predicting failure using a meta model and input values comprising torque and speed.

For instance, Hexagon's Romax provides a software that calculates fatigue damage on gears and bearings according to load (torque), speed, and selected ratio ("Romax analysis"). The fatigue damage calculations may be based upon international standards, such as ISO 6336 for gears and ISO 281 for bearings. In addition, misalignment may degrade the life of both gears and bearings - depending on the whole gearbox structure (deflection of housing, shafts, gears, bearings) and complex deflection in 3D. This can be addressed by an additional deflection calculation, e.g. taking in consideration that more torque increases stress, which increases damage for gears and bearings, and also that torque increases the misalignment. Thus, with the different values of torque, speed and ratio as input, the analysis would provide the damage for each component as output. Training data can be created for a range of different torques and speeds and all ratios. A statistical relationship may be created, which involves interpolation only. Using numerical methods, a 'statistical relationship' can be derived to represent a full physics model. This could be a look-up table, a regression or AI/ML. Checks can be made that the statistical relationship provides the same results as the software (e.g., Romax). Thus, a surrogate model can be successfully created to take place of and run faster than the Romax calculation.

In known applications, the digital twin works as an open loop, i.e. without any self-correction based on feedback. By closing the loop, i.e. establishing a closed-loop prediction, the digital twin can be made self-correcting. Self-correcting means that the digital twin is modified so that prediction is made to match observation; this can be done using an evolving digital twin (if the physics-based content of the model remains the same) or a mutating digital twin (if the digital twin permits competing physics-based models to be run in parallel). The loop is closed when the predicted failure rate matches the observed failure rate. A reverse process is created that adjusts the forward process so that the two match.

Control parameters to be included in the analysis can include the fatigue strength of the gear material, the relationship between stress and life, the yield strength of the material, and optionally one or more application factors, e.g. K_{A} for gears and a_{ISO} for bearings. Similarly, for the reliability calculation reliability the Weibull shape parameter (Beta) may be used. It affects the spread of the population - i.e., how the failures are spread out. For instance, a Beta value of 1.5 can be chosen as an initial value for bearings and 3.2 for gears. When simulations are run to create the training data, these control parameters are included as input parameters for the meta model and updated based on evidence.

The meta model does not predict a single value of fatigue damage and failure rate for a given data set of torque and speed, but a whole range of different failure rates. Therefore, once failure rates are observed, the actual failure rate can be compared with the predicted failure rate and the adjustment can be made to the prediction to make it match the observation. The digital twin thereby becomes self-correcting, but essentially evolving, one that does not change at all in terms of its fundamental nature but changes a bit to meet a goal, that of the prediction matching the observation. All of the same methods for understanding and simulating the physics are unchanged.

The digital twin may comprise a chain of calculations with several physics options including system deflection analysis, tooth contact analysis, ISO 6336 stress calculation and ISO 6336 damage calculation. However, the chain of calculations may also comprise Finite Element (FE) analysis and/or DC-E damage models. Using inputs like torque, speed and K_{A}, the surrogate model provides damage as output. The reliability calculation is based on Weibull (β) and provides the predicted failure rate as output. By comparing the predicted failure rate with an actual failure rate, the control parameters (e.g., K_{A} and Beta) as well as the used physics options may be adjusted until the predicted failure rates meet the actual failure rates. For instance, the following physics options may be mixed and matched:
- Physics option 1: Romax tooth contact, ISO stress calculation, ISO damage model;
- Physics option 2: FE tooth contact and stress, DC-E damage model;
- Physics option 3: Romax tooth contact, ISO stress calculation, DC-E damage model (a method of fatigue simulation provided by Sentient Science);
- Physics option 4: FE tooth contact and stress, ISO damage model.

Each of these can become its own surrogate model option. The calculations can be run up front to create the training data from which lots of different surrogate models can be suggested. They are all lightweight in terms of computational effort, but at the same time embody the huge complexity and precision in the calculations that they represent. At the same time, they also have 'exposed' the important parameters (K_{A} and Beta) that allow them to be adjusted so that the prediction matches the observation.

Accordingto certain embodiments of the invention, a flexible digital twin is generated that can adjust the balance between data and physics to achieve the optimum performance of the digital twin. Such a flexible digital twin may be generated with a combination of:
1. Computer-aided engineering (CAE),
2. Reduced-order models (ROMs),
3. CAE-derived surrogate models (SMs), and
4. Evidence-derived SMs.

CAE may be used where the maximum accuracy is required and where the complexity of the CAE does not lead to processing times that slow down the operation of the digital twin. ROMs, derived from the CAE, may be used where there are benefits in retaining the physics, but computational speed needs to increase compared to CAE. ROMs can be created easily where the physics behaves in a consistent way that is suitable for treatment (simplification, order reduction) using one of the order reduction techniques. SMs derived from training data produced by CAE may be used when the speed needs to increase compared to CAE, but the physics is not suitable for treatment using one of the other reduction techniques. A weakness of SMs is that, once created, the SM cannot be decomposed into smaller blocks and cannot explain the behaviour underlying the model in the way that CAE and ROMs algorithms can. SMs derived from evidence (i.e., measured data) are used when no physics is available to provide a consistent model to describe the observed behaviour.

The digital twin can be generated using blocks in a flow diagram that include one of the four approaches, or any combination of one or more of the four, arranged in any order (e.g. series or parallel), combining of providing inputs to other blocks.

The three targets of the digital twin are speed (in particular compared to real-time operation), accuracy (match to actual behaviour of the machine) and interpretability (physics allows the behaviour of the machine to be understood and learning applied to similar machines with a different specification as well as to new machines during design). An enhanced combination thus enhances - particularly optimizes - at least a subset of speed, accuracy and interpretability.

Since the prediction may not match the observations, the digital twin may need to be updated to improve accuracy. When generating the digital twin, it needs to be constructed in a way that makes this updating possible.

For each block that is derived from physics (i.e., CAE, ROMs and CAE-derived SMs), input parameters are included that allow the result of the digital twin to vary and be adjusted so as to match the observation. Examples of these input parameters can include the material fatigue strength, the slope of the S-N curve, the Weibull shape parameter, damping, application factor, life factor etc. This applies to the three types of blocks derived from physics but not to the evidence-derived (data-only) SMs. This is because the relationships between the input and output of the blocks derived from physics are defined by physics-based equations. This remains the same even if the block has been converted into a CAE-derived SM, where the actual equations are no longer computed. When evidence-derived SMs are used, they can either be derived from data collected from other machines and inserted into the digital twin, or they can be obtained by observing the behaviour of the machine in operation and deriving a SM that closes the gap between observation and reality.

When a block comprising CAE or ROM is used, it can be decomposed (broken down) into its constituent equations and relationships, i.e. sub-blocks. Each of these sub-blocks can similarly be any of the types mentioned - CAE, ROM, physics-derived SM and data-derived SM, and again, each of these can be set up such that key parameters can be left exposed as input parameters so that they can be adjusted to as to achieve correlation between prediction and observation.

Having all input parameters as variables to be adjusted can lead to a process that is excessive in computational effort and memory requirements and will lead to uncertain results. Preferably, any parameter used in the physics can be selected as a variable to be adjusted to achieve correlation, but most remain fixed and therefore buried in the code. Therefore, the engineer has the option to access any parameter that is believed to be important in achieving correlation, whilst leaving all the rest untouched, thereby still retaining the discipline and interpretability of the existing physics framework. Different parts of the calculation can be accelerated using ROMs or SMs, as appropriate. Thus, the three goals of accuracy, speed and interpretability may be achieved in unison.

Wherever CAE, ROM or physics-based SMs are deployed, different physics-based models may be run in parallel. This can be described as a "mutating digital twin" (MDT). Ideally, these competing physics-based models will have the same input parameters but will differ in the algorithm used to describe how this input parameter describes the behaviour of the machine. As explained previously, these different algorithms are in fact different descriptions of physics, which are implemented in the form of mathematical algorithms that are defined in executable code.

These competitive models can exist at any level of the overall description of the machine performance, at the top-level model, the sub-model level, or sub-sub-model level etc. Therefore, when setting up the mutating digital twin there exists total freedom for the engineer in terms of being able to identify and expose any parameter that may be important in describing the machine behaviour and using it as an input to any part of the model, sub-model, sub-sub-model, with competing algorithms provided for any of these models, sub-models or sub-sub-models.

Leaving too many parameters exposed or provide too many competing models can lead to unconvincing and incomplete correlation between prediction and observation. The starting point is to have the evolving digital twin, where there is a single, fixed framework for the physics; from here the engineer has the option to create a mildly mutating digital twin, where only minor adjustments to the physics are suggested and investigated, or a strongly mutating digital twin, where major adjustments are suggested and investigated. The choice of how mild/strong the engineer selects the degree of mutation to be will depend on the abundance and consistency of the measured data in the given application.

In case of a surrogate model, this is set up to represent the physics and the computationally expensive physics that would normally be needed. In this instance, a wide range of environmental and operating conditions are identified (wide enough to encompass all conceivable scenarios), the full-physics simulation is run and output values recorded. This is normally much faster and computationally less intense, and can be deployed in real time - i.e., the results are available faster than the input conditions change. Alternatively, a ROM is created, i.e. one in which the physics can be simplified so as to run faster but that is still good enough to represent the behaviour of the machine.

Different manufacturers producing the same type of machine (e.g., a gearbox) may identify different parameters to be adjusted and different additional physics models for inclusion. The abundance of data and computational power can then reignite the technical progress of engineering design.

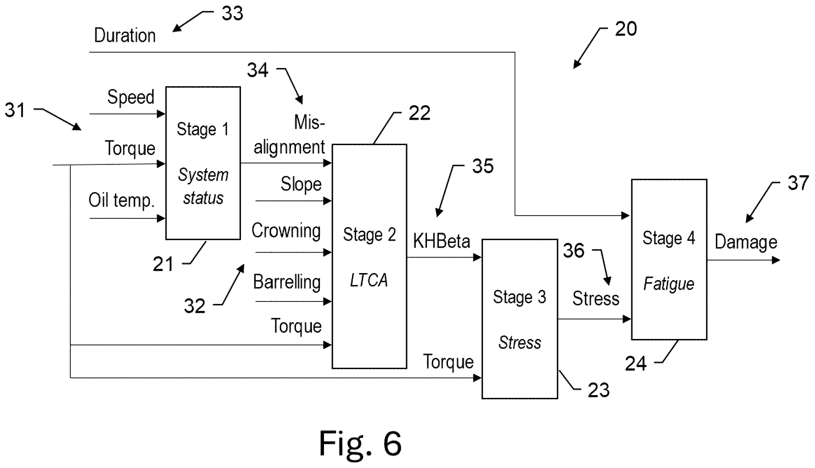

Figure 6 shows a sequential collection of modules, each containing meta models, including multiple feedback loops to different input parameters for predicting failure. Together, these modules form a complex meta model 20 that is embodied as a "modular" meta model comprising sequentially arranged modular blocks 21-24. Such sequentially arranged blocks in a digital twin are an enabling step in making an MDT work. In standard digital twins (using one set of physics models) the physics must be wrapped-up into a meta model (SM or ROM) to make it run in real time. In the MDT the burden is multiplied, so modular meta models are essential to make it work. The downside of a singular surrogate model is that understanding is lost - it has become a black box. Modular models, each with their key control parameters exposed, allow the prediction of machine performance to be broken-down into steps. It is possible that, out of four steps in the prediction of machine performance, three will be sound but one needs to be improved. If all four steps are wrapped-up into a single meta model, then the chain is only as strong as the weakest link-the behaviour will be seen as poor for all four steps. However, if it is broken into fourseparate steps, it becomes possible to identify which steps are valid and which need to be replaced. This meta model links all the inputs to the observed output.

This process of breaking down the calculation process into modular blocks, each of which are meta models that have critical control parameters exposed, is key to facilitating both EDTs and MDTs. They are implemented as meta models since they need to run in real time. In the case of surrogate models, the physics is replaced by a statistical model that gives the same results as the physics model, however since the surrogate model gives the same results as the physics model, it is possible to adjust the control parameters to get a match between prediction and observation at the same time as running real time.

Since multiple, modular meta models can be set up, each with their critical control parameters exposed as inputs, great nuance can be coded into the MDT, thereby allowing multiple options for competing physics-based models and correlating the critical control parameters.

Breaking the meta model 20 down into the plurality of modular blocks 21-24 ("stages") allows combining different options in each of these areas and swapping each smaller model in and out. For example, there could be two options for each of these methods, so that there would be 16 options overall. For instance, dealing with the system statics in "Stage 1" 21 may involve either only load or load and temperature. Also, different mathematical methods and/or software solutions could be used. For instance, when dealing with Loaded Tooth Contact Analysis (LTCA) in "Stage 2" 22, an approach based either on Romax or on Load Distribution Program (LDP) could be used. Likewise, dealing with stress in "Stage 3" 23 may include using ISO 6336 or Finite Element (FE) Analysis and dealing with fatigue in "Stage 4" 24 may include using ISO 6336 or CAEfatigue.

Breaking down the maths allows the increase in fidelity of the digital twin to take place in step with the validation of each aspect of the physics (causality). It also highlights where there are weaknesses in the understanding (lack of correlation), where additional research is needed. The alternative is that fidelity (complexity) is increased at a faster rate than correlation. Also, in case of lack of correlation (evidence matching prediction) increased complexity need not be the solution.

In an EDT, the situation may arise where the prediction matches the observation. However, since the prediction is a combination of several behaviours linked together, a single model (e.g., as shown in Figures 3 and 5) mixes them all together. In the example of a gearbox, the correlation between prediction and observation is valid only for a single gearbox. Learnings from other gearboxes having different designs, cannot be used. When the performance is split into different physics and have options on each, there are greater alternatives for each stage. The chances are increased that a combination of the physics will be found that provide a match between prediction and observation.

Additionally, the splitting of the physics is going to be the same for different gearboxes. The 'performance' (in terms of prediction matching correlation) of, e.g., a Loaded Tooth Contact Analysis (LTCA) method can be compared in multiple gearboxes with different designs. The same material (with S-N curve) can be used in different gearboxes. Thus, more data can be aggregated, getting better results more quickly on account of the greater statistical significance of the larger sample.

In each of the modules 21-24 of the modular meta model 20 of Figure 6, different physics-based models have created the respective module. Thus, taking "Stage 3" 23 as an example, there might be a first version based on ISO 6336 and a second version based on Finite Element Analysis. Thus, there are two potential outputs for stress and, thus, damage (all else being kept constant). When these are fed into the reliability model, there are two different predictions of reliability that can be compared to observations. These two versions of "Stage 3" 23 are easy to interchange because they have the same inputs and outputs. Meta model modules implemented sequentially are thus an enabling characteristic of MDTs.

In other words, breaking a meta model down into modular blocks 21-24 that run sequentially, advantageously allows breaking them down into different areas of physics. In the shown example, the first modular block 21 receives speed, torque and oil temperature as input 31 and thus only deals with system statics, providing a misalignment as output 34. The second modular block 22 receives the misalignment from the first modular block 21 and the torque. The additional input 32 comprises the slope, crowning and barrelling, so that the second modular block 22 deals with Loaded Tooth Contact Analysis (LTCA). The output 35 is the gearbox' KHBeta (KHβ) value, a parameter within ISO 6336. The third modular block 23 receives the KHBeta from the second modular block 22 and also the torque as input, thus dealing with stress (e.g., based on ISO 6336 and/or Finite Element Analysis). The last modular block 24 receives the stress from the third modular block 23 and information about the gearbox's duration of operation 33 - i.e., a number of cycles - as input. Dealing with fatigue, the last modular block 24 may define an S-N curve and provides the damage as final output 37 of the modular meta model 20.

The modular blocks 21-24 can also be described as stages of a calculation:
- Stage 1 (block 21): torque to system deflection analysis to get misalignment (system deflection analysis);
- Stage 2 (block 22): misalignment and torque to tooth contact analysis to get KHBeta (Loaded Tooth Contact Analysis (LTCA);
- Stage 3 (block 23): torque and KHBeta to get gear stress (ISO 6336);
- Stage 4 (block 24): stress and number of cycles to get fatigue damage (ISO 6336). In addition, the calculation may comprise a fifth stage:
- Stage 5 (not shown here): fatigue damage to get reliability (Weibull reliability).

Each of the stages has its own mathematical equations that describes physics describing real-world causal relationships. The EDT allows this to be tweaked so that the prediction can more closely match reality, but it is constrained to keep the same overall relationships. For example, stages 2 and 3 could be replaced by Finite Element analysis. Also, the stress-life damage model of ISO 6336 could be replaced by a micro-structure-based fatigue simulation such as that of Sentient Science's Digital Clone.

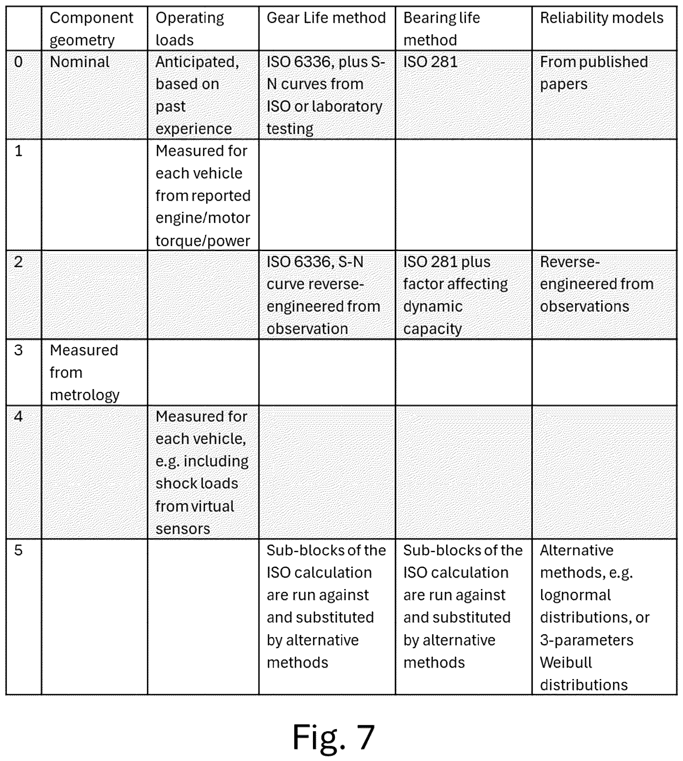

The table of Figure 7 illustrates the progression by which an FDT of a gearbox changes into an MDT.

Computer Aided Engineering (CAE) predicts the gearbox durability and reliability, something that is used in gearbox design. In this instance, a physics-based model of the gearbox is created and anticipated operating conditions are used to calculate the stresses in the gears and bearings, which feed into life calculation models based on fatigue. Nominal dimensions are used for the components, in particular gear micro-geometry. Thus, it is mostly physics with some input from past data (how gears and bearings fail, how vehicles are driven) which is summarised in approximate rules. The bearing failures are embodied in bearing standards such as ISO 281 and the gear failures in standards such as ISO 6336 with its associated S-N curves. It is possible to test gear materials to derive their S-N curves in a laboratory and put this data in the model. This is a digital twin in terms of a Digital Twin Prototype and shown in row "0".

The progression (shown in rows "1" to "5") by which this digital twin slowly changes is as follows:
1. Instead of anticipated loading conditions from past data or limited fleet testing, the loading data from all vehicles is recorded and used in the simulation. This can be done on a vehicle-by-vehicle basis or a statistical analysis of the fleet.
2. Reliability predictions are compared to the actual reliability. Owing to the spread in reliability, comparisons on a vehicle-by-vehicle basis mean nothing. However, by aggregating the data from many thousands of vehicles, it is possible to identify mismatches between the predicted and observed failure rates. In the first instance this mismatch can simply be assigned to a variation in the allowable stress of the gear material (from which the S-N curve is derived in ISO 6336) or KA (application factor in ISO 6336), or a modification factor (a-iso) that can be applied to the life of the bearing (which defines the durability of the bearing in ISO 281).
3. Instead of basing the digital twin on the nominal dimensions of the gearbox, a further enhancement is to take measured data from the manufactured components, for example gear micro-geometry, and include this in the reliability prediction for each gearbox.
4. Instead of using steady-state loading based on low frequency data (e.g. 1 Hz) and reported engine or motor torque, certain events negatively affecting the gearbox, such as shock loads, can be derived using virtual sensors (as described with respect to Figure 2).
5. Instead of basing the stress and fatigue calculation methods on ISO 6336, alternative methods can be inserted and run in parallel with the ISO methods. If these methods are found to give better results (i.e., a closer match between prediction and observation) then such methods can be substituted into the calculation. This can be carried out for one or more of many different behaviour aspects of the gear. A similar approach can be done for bearings. Thus, the digital twin of row "5" is an MDT.

These five developments can be combined, and they do not have to be applied in this order, but they are all examples of FDTs (rows "1" to "4") or MDTs (row "5").

The use of the modular meta model 20 of Figure 6 with sequentially implemented modules 21-24 separates out the different physical phenomena - in the shown example static deflections, gear tooth contact, stress and fatigue. It is a means by which alternative models can be run in parallel, and they can be combined, and the winning combination of modules 21-24 can be identified.

In other words, there are three stages: Flexible Digital Twin (FDT), Evolving Digital Twin (EDT) and Mutating Digital Twin (MDT). An FDT allows the adjustment of the balance between data and physics to provide flexibility in how the digital twin is constructed according to how mature is the understanding of the machine behaviour. Four kinds of models (CAE, ROMs, SMs from CAE, and SMs from test data) are arranged in a block manner so that there are sub-models and sub-sub-models, which can be any of the four types. Details may be added to whatever part that needs to be more detailed by exposing parameters involved in sub-models or sub-sub-models so that these parameters can be updated to get a match between observation and prediction. At the same time, code that needs no attention may be combined to wrap it up into a 'super-block'. Using ROMs and physics-based SMs allows accelerating, whilst still retaining the insight of the physics. For an EDT, a parameter that is used in an equation is pulled out and made an input to one of the blocks. Then the result is fed back and it is identified what value of the input parameter delivers the best match between prediction and observation. This works for CAE, ROMs and physics-based SMs and is dependent on the modular (block-based) setup, since one can choose to wrap up and hide those parameters that appear not important. This provides complete freedom to retain what has worked before but adjust and improve what needs improving. A mutating digital twin MDT additionally runs different physics-based models side by side and identifies which one works the best. The result may then be provided to an operator (engineer) to decide to substitute it into the digital twin. Alternatively, this approach can be applied automatically.

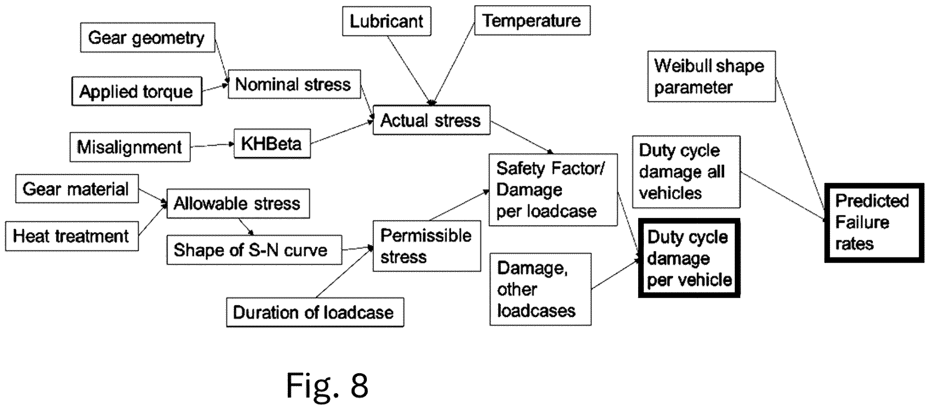

Figure 8 illustrates, as an approximation, how the ISO 6336 calculation works, and how item in row 1 in the table of Figure 7 is achieved. There are many input parameters that come from the model that represent the component geometry, operating loads (applied torque, duration of load case), and it includes the gear material's S-N curve. It outputs the damage (e.g., pertaining to 1% failure rate), and then the Weibull shape parameter from published data gives the reliability distribution. In order to allow fast operation without human intervention, the digital twin comprises a meta model as described previously. This meta model has inputs as torque (or power), speed, and duration (typically on a 1-second basis), output as damage and optionally reliability.

Because this runs very quickly, it is possible to take real-time data from each vehicle and calculate the damage to the gearbox without expensive calculation. This can be cloud-based or an edge solution (i.e., performed on the vehicle). Thousands of vehicles can be calculated efficiently.

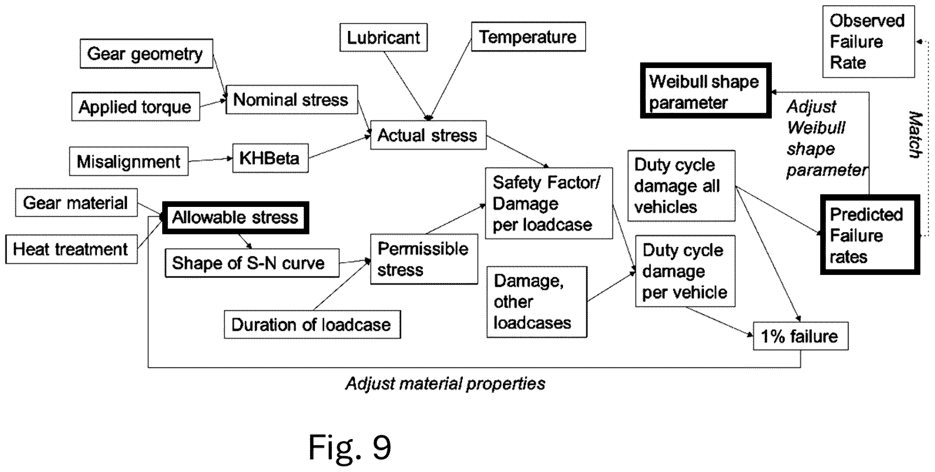

Figure 9 illustrates how to achieve the item in row 2 in the table of Figure 7. The predicted reliability is compared with the actual reliability on a vehicle-by-vehicle basis. Failure or survival of a gearbox on an individual vehicle alone does not provide any useful information, but when the results from the fleet are aggregated, then data from the population as a whole can be obtained. Assuming that ISO is a good representation of the physics of gear/bearing failure and Weibull a good approximation of the distribution of reliability, the damage to failure for each gear that has failed is calculated and a Weibull analysis is carried out. The meta model modules are refined such that the Weibull shape parameter and the allowable stress are now inputs to the modules (rather than fixed parameters within the model). A control loop is carried out to achieve as close a match as possible between the prediction and observation.

It is known to assign to each gear its nominal micro-geometry and to use this in the digital twin. It is also possible to refine this digital twin by including measured micro-geometry. In order to use this data in a digital twin with meta model, the sequential meta model modules are used to extract the gear LTCA out of the ISO calculation and then to output KHBeta, a factor within the ISO calculation. The four input parameters (lead slope, lead crowning, involute slope, involute barrelling) are examples of the data that can be measured, but more complex definitions can be used. All the same, in this simple example these parameters are made inputs to a meta model. Thereby, the item in row 3 of the table of Figure 7 is achieved.

In the initial operating twin implementation, the data for the loading is taken from the machine's (e.g. engine's) torque (or power) and speed. This is typically available on the CAN-bus (CAN = controlled area network) and is easily accessible for recording and data processing. However, while it defines what loads the vehicle intends to send through the gearbox, but it is not what actually gets transmitted through the gears. When a vehicle runs over rough ground, shock loads can occur. Due to shock loads the instantaneous torque through (loading within) the gearbox will be subject to higher loads which will (e.g., due to the disproportionate relationship between load and damage) cause a decrease in component life. A 'shock load detector', an example of a Virtual Sensor, can identify these shock loads by monitoring the CAN signals (e.g. wheel speeds) at high frequencies (typically 100-200 Hz) and collate the number of shocks and their magnitude. This can be used as an input to the reliability calculation. Thereby, the item in row 4 of the table of Figure 7 is achieved.

In Figure 6, module 23 has torque as an input and stress as an output. This is carried out using LTCA followed by ISO 6336 in this instance. However, either ISO 6336 or both steps could be replaced by Finite Element (FE) model, as an example. Although FE analysis is much slower than ISO 6336, this problem can be mitigated by doing the processing offline, in the creation of the training data and subsequent conversion into a meta model, so that it is a meta model that gets implemented in the digital twin. The inputs to the meta model from the FE analysis are identical to those from the original setup. Therefore, they can be run in parallel with one another and the 'best' combination identified ('best' meaning that the prediction most closely matches the observation). Thereby, the MDT and the item in row 5 in the table of Figure 7 are achieved.

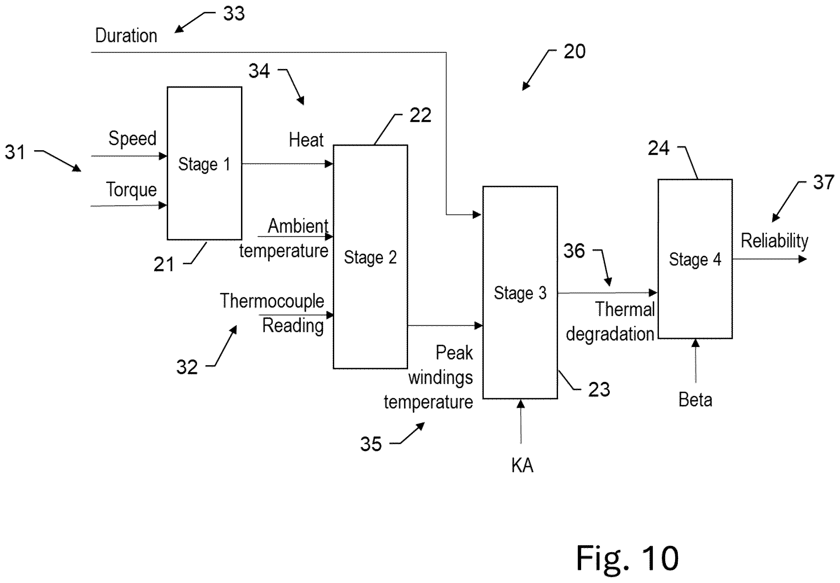

Another example of machines the behaviour of which may be predicted using a method according to the invention are electric machines. The use of a self-correcting digital twin for electric machines is illustrated in Figure 10.

Electronics are an increasingly significant part in many machines, including ground vehicles. Their failure can be expensive since it takes out of use a much larger, and expensive collection of mechanical engineering equipment, one that will have had significant investment in its manufacturing in terms of energy and CO₂. It is known that electronics can fail when the soldered joints are fractured. This can happen due to vibratory forces or thermally induced stresses. In both cases this can be a one-off event or the result of cyclical (fatigue) loading. While engineers generally understand the different sciences of heat generation, distribution and dissipation, mechanical dynamics, strain and stress, and fatigue, modern electronic assemblies are very complex. Additionally, every soldered joint will have been created in a slightly different way, with different geometry, area, mechanical properties and stress raisers. Due to the tiny nature of each joint plus the volume in which they are made, there will always remain uncertainties in each manufactured electronic assembly. Finally, the thermal cycling of any electronics part will depend on heat generation and dissipation via conduction, convection and radiation. All of this can, in theory, be computed by CFD, but only with great computational effort. This means that it is very difficult to generate physics-based models that can accurately and reliably predict the reliability of the electronics from first principles. It also means that it is very unlikely that widely accepted, validated, public-domain methods for predicting the reliability of electronics will ever emerge. Rather, observations will need to be taken from electronic assemblies that are operated in service and matched with data regarding their environmental conditions (temperature, stress). Thus, the application is highly suitable for the application of a self-correcting digital twin, one that is based on physics, but which accounts for and makes use of the evidence provided by data and observations from in-service operations.

Electric machines are increasingly important in a world where tackling climate change is one of the primary challenges. Electric machines have a role in generating power (mechanical to electrical energy conversion), delivering emission-free mobility (electric vehicles) and actuation functions for a whole range of machines such as robotics or actuators. Systems driven by electrical machines offer the possibility of a long service life - they have far fewer moving parts compared to other kinds of machines (e.g. internal combustion engines). However, failures can occur when the windings are subject to long periods at high temperatures or excessive cycling from high to low temperatures. Even then, the precise nature of the failure rate and the details of this relationship are not known. There are no standards for the thermal model of an electric machine or the degradation of the windings due to thermally induced loads.

An example of a digital twin for such an electric system is shown in Figure 10. Similar to the modular meta model 20 of Figure 6, a plurality of modular blocks 21-24 are provided for different "stages" of calculation. In the shown example, the input values 31 torque and speed of the motor are known. Also, there is a thermocouple that will give an indication of the temperature at some location within the motor, although this is not necessarily the hottest part.

In the first stage, the first modular block 21 receives speed and torque of the motor as input 31, calculates the heat generation within the electric machine based on operating conditions and provides a heat value as output 34. In the second stage, the second modular block 22 receives the heat value from the first modular block 21 and additional input 32 comprising an ambient temperature and the reading of the thermocouple. It calculates the heat dissipation within the electric machine and to the environment, using data about the actual temperature at certain locations within the electric machine. The output 35 is the peak temperature in the windings. In the third stage, the third modular block 23 receives the peak temperature from the second modular block 22 and information about the electric machine's duration of operation 33 as input, and, based on the time at temperature, calculates the thermal degradation as output 36. In the fourth stage, the last modular block 24 receives the thermal degradation from the third modular block 23, and, based on the reliability curves, predicts the reliability as final output 37 of the modular meta model 20.

As described with respect to Figure 6, for each of the stages different physics can be used, thus having a number of physics options. Input parameters in the training may comprise factors that increase or decrease the damage at a given temperature, such as the Weibull shape parameter, and other parameters which will effectively perform the same function as application factor K_{A} for gears. Thus, an evolving and/or a mutating digital twin is created, where the digital twin can be updated based on evidence using the original physics framework (evolving) or new physics (mutating).

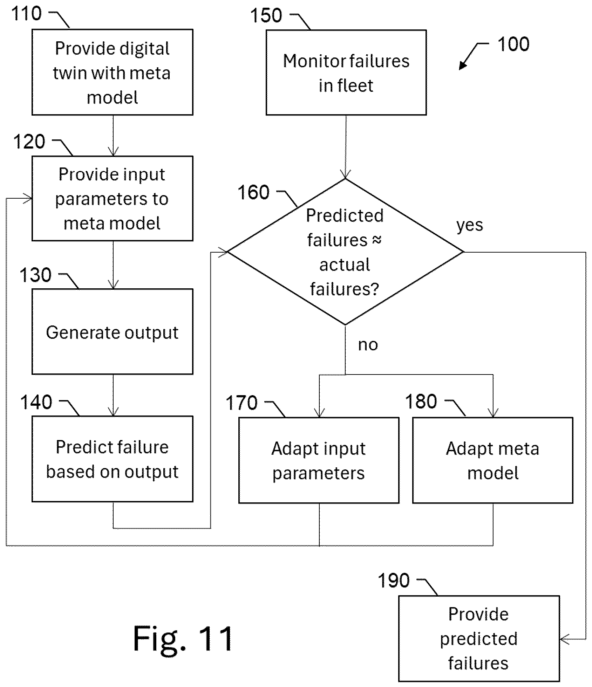

Figure 11 is a flow chart illustrating an exemplary embodiment of a computer-implemented method 100 for predicting behaviour of a machine. In the shown example said behaviour is failure, and the machine is of a plurality (fleet) of nominally identical machines, such as mechanical load transmitting machines or gearboxes. The method 100 comprises a prediction process and an adaptation process.

The method begins with providing 110 a mutating digital twin for each of the machines of the fleet, each mutating digital twin comprising a meta model with reduced-order models (ROMs) or surrogate models (SMs). In particular, the meta models are modular, each modular meta model having a plurality of sequentially arranged modules being created by different physics-based models.

The prediction process of the shown method 100 comprises providing 120, to each meta model, input parameters regarding at least operating and environmental conditions of the respective mutating digital twin, generating 130, by each meta model and based on the respective input parameters a final output, and predicting 140 the behaviour, i.e. the failure, of each machine of the fleet of machines based on the output of the respective meta model.

The method also comprises monitoring 150 the behaviour (failure) of the machines of the fleet. The method's adaptation process comprises determining 160 whether a relationship between the actual behaviours and the predicted behaviours is within a predefined threshold - i.e., whether the monitored failures meet the predicted failures. If the relationship is not within the threshold, the method's adaptation process continues with adapting 170 one or more of the input parameters, particularly their values and/or with adapting the meta model, particularly at least one of the sequentially arranged modules of a modular ROM. The prediction process and the adaptation process are then repeated with the adapted input parameters and/or the adapted model until it is determined 160 that the relationship between the actual behaviours and the predicted behaviours is within the predefined threshold.

In that case, the method continues with outputting the predicted behaviours, i.e., providing 190 the predicted failures to a user or to a maintenance scheduling system.

Although the invention is illustrated above, partly with reference to some preferred embodiments, it must be understood that numerous modifications and combinations of different features of the embodiments can be made. All of these modifications lie within the scope of the appended claims.

## Claims

1. Computer-implemented method (100) for predicting behaviour, particularly failure, of one or more machines of a plurality of nominally identical machines, the machines being exposed to mechanical stress and the behaviour being effected at least partially by the mechanical stress, particularly wherein the machines are mechanical load transmitting machines or gearboxes,
wherein the method comprises providing (110) a digital twin for each of the machines, each digital twin comprising a meta model (20), the meta model comprising at least one of a reduced-order model and a surrogate model, the method further comprising a prediction process and an adaptation process,
wherein the prediction process comprises:
- providing (120), to each meta model (20), input parameters (31-33) regarding at least operating and environmental conditions and/or properties of the respective machine;
- generating (130), by each meta model and based on the respective input parameters (31-33), a final output (37); and
- predicting (140) the behaviour of each machine of the plurality of machines based on the final output (37) of the respective meta model,
wherein
- the method comprises monitoring (150) the behaviour of machines of the plurality of nominally identical machines;
- the adaptation process comprises determining (160) whether a relationship between the actual behaviours and the predicted behaviours is within a predefined threshold;
- the adaptation process comprises, if the relationship is not within the threshold, adapting (170) values of one or more of the input parameters (31-33) and/or adapting (180) the meta model, wherein the prediction process is repeated with the adapted values and/or the adapted meta model; and
- the method comprises providing (190), if the relationship is within the threshold, the predicted behaviours of at least a subset of the plurality of systems to a user or to a maintenance scheduling system.

2. Method (100) according to claim 1, wherein
- the meta model comprises a plurality of sequentially arranged modules (21-24), the modules being created by different physics-based models; and
- the adaptation process comprises, if the relationship is not within the threshold, adapting (180) the meta model, wherein adapting (180) the meta model comprises adapting at least one of the sequentially arranged modules (21-24), wherein the prediction process is repeated with the adapted modules.

3. Method (100) according to claim 2, wherein adapting at least one of the sequentially arranged modules (21-24) comprises exchanging one or more of the modules (21-24) of the meta model (20) by an interchangeable module version that is created using a different physics-based model, in particular wherein exchanging one or more of the modules (21-24) involves a decision by an artificial intelligence based on the relationship, particularly using a fitness function.

4. Method (100) according to claim 2 or claim 3, wherein the different physics-based models for creating the modules (21-24) comprise at least a subset of
- ISO 6336;
- ISO 281;
- Finite Element Analysis;
- Loaded Tooth Contact Analysis; and
- a micro-structure-based fatigue simulation.

5. Method (100) according to any one of claims 2 to 4, wherein the plurality of sequentially arranged modules (21-24) includes a first module (21), a last module (24) and one or more intermediate modules (22, 23), each module being configured to receive input and to generate output (34-37) based on the received input, the method comprising, for each machine of the plurality of machines,
- providing (122) a first set of parameters (31) as input to the first module (21) to generate first output (34);
- providing (124) the first output (34) and a second set of parameters (32) to an intermediate module (22, 23) to generate intermediate output (35, 36);
- providing (128) intermediate output (35, 36) as input to the last module (24) to generate the final output (37),
wherein adapting (170) the input parameters comprises adapting at least one of the first set of parameters (31) and the second set of parameters (32).

6. Method (100) according to claim 5, wherein the plurality of sequentially arranged modules (21-24) includes at least two intermediate modules (22, 23), wherein the first output (34) and the second set of parameters (32) are provided (124) to a first intermediate module (22) to generate first intermediate output (35), wherein
- the plurality of sequentially arranged modules (21-24) includes two intermediate modules (22, 23), the method comprises providing (126) at least the first intermediate output (35) as input to a second intermediate module (23) to generate second intermediate output (36), and the second intermediate output (36) is provided (128) as input to the last module (24) to generate the final output (37); or
- the plurality of sequentially arranged modules (21-24) includes n intermediate modules (22, 23), where n > 2, and the method comprises providing (126) to each of the further intermediate modules at least the output of the respective previous intermediate module as input to generate a respective intermediate output, wherein the *n^{th}* intermediate module generates the intermediate output (36) that is provided (128) as input to the final module (24).

7. Method (100) according to claim 5 or claim 6, wherein
- the machines are gearboxes;
- the first set of parameters (31) comprises at least one of speed, temperature and torque, and the first output (34) is a misalignment; and
- the second set of parameters (32) comprises at least one of slope, crowning and barrelling, particularly wherein the second set of parameters (32) also comprises torque,
in particular wherein the input parameters (31-33) comprise a nominal or measured micro-geometry of a gear, and the different physics-based models for creating the modules (21-24) comprise at least a micro-structure-based fatigue simulation.

8. Method (100) according to any one of claims 5 to 7, wherein
- the behaviour of the machine is or comprises failure of the machine;
- the intermediate output (35, 36) provided as input to the last module (24) is related to stress; and
- the final output (37) is related to an estimated damage to the machine.

9. Method (100) according to any one of the preceding claims, wherein
- the prediction process and the adaptation process are reiterated until it is determined (160) that the relationship between the monitored behaviours and the predicted behaviours is within the pre-defined threshold, in particular until it is determined that the predicted behaviours match the monitored behaviours; and/or
- determining (160) whether the relationship is within the predefined threshold comprises determining whether the predicted behaviours match the monitored behaviours, wherein the values of the input parameters (31-33) and/or the meta model are adapted and the prediction process is repeated if the predicted failures do not match the monitored behaviours; and/or
- determining (160) whether the relationship is within the predefined threshold comprises performing a Weibull analysis.

10. Method (100) according to any one of the preceding claims, wherein
- the behaviour of the machine is or comprises a failure of the machine,
- the final output (37) is related to an estimated damage of the respective machine, particularly wherein the estimated damage is derived using Miner's rule;
- monitoring (150) the behaviour of machines of the plurality of nominally identical machines comprises monitoring the occurrence of actual failures of the machines; and
- the relationship between the actual behaviours and the predicted behaviours is a relationship between the actual failures and the predicted failures,
particularly wherein, if the relationship between the monitored failures and the predicted failures is within the predefined threshold, the predicted failures of at least a subset of the plurality of machines are provided (190) to a maintenance scheduling system, and a maintenance for one or more machines of the subset is automatically scheduled based on the provided predicted failures.

11. Method (100) according to any one of the preceding claims, wherein the input parameters (31-33) are adapted (170) based on the relationship and to approach the monitored behaviours with the predicted behaviours, particularly wherein the input parameters (31-33) comprise a nominal or measured micro-geometry of one or more components of the machine.

12. Method (100) according to any one of the preceding claims, wherein the machines
- are gearboxes and the input parameters (31-33) comprise at least one of speed, torque and temperature, particularly oil temperature, and at least one of lead slope, lead crowning, involute slope and involute barrelling, particularly wherein the input parameters also comprise information about a duration of operation (33) of the respective gearbox; or
- are electric machines and the input parameters (31-33) comprise at least one of speed, current and torque, and at least one of ambient temperature and thermocouple reading, particularly wherein the input parameters also comprise information about a duration (33) of operation of the respective electric machine.

13. Digital twin of a machine, the digital twin comprising a meta model (20), the meta model being one of a reduced-order model and a surrogate model and having a plurality of sequentially arranged modules (21-24) being created by different physics-based models, wherein the plurality of sequentially arranged modules (21-24) includes a first module (21), a last module (24) and one or more intermediate modules (22, 23), each module being configured to receive input and to generate output (34-37) based on the received input, the input comprising input parameters (31-33) regarding at least operating and environmental conditions of the machine, wherein
- the first module (21) is configured to generate first output (34) based on a first set of parameters (31);
- an intermediate module (22, 23) is configured to generate intermediate output (35, 36) based the first output (34) and a second set of parameters (32); and
- the last module (24) is configured to generate the final output (37) based at least on intermediate output (35, 36),
wherein the digital twin is configured to perform an adaptation process, particularly the adaptation process of the method (100) according to any one of claims 1 to 12, wherein the adaptation process comprises
- determining (160) whether a relationship between an actual behaviour and a predicted behaviour of the machine is within a predefined threshold, the predicted behaviour being predicted (140) based on the final output (37); and,
- if the relationship is not within the threshold, adapting (170) values of one or more of the input parameters (31-33) and/or adapting (180) at least one of the sequentially arranged modules (21-24) to generate a different final output (37) until the relationship between the actual behaviour and the predicted behaviour is within the threshold.

14. Digital twin according to claim 13, wherein the adaptation process comprises adapting (180) at least one of the sequentially arranged modules (21-24), wherein adapting (180) at least one of the sequentially arranged modules (21-24) comprises exchanging one or more of the modules (21-24) of the meta model (20) by an interchangeable module version that is created using a different physics-based model, in particular wherein exchanging one or more of the modules (21-24) is performed by an artificial intelligence based on the relationship, particularly using a fitness function.

15. Computer program product comprising program code having computer-executable instructions for performing the method (100) according to any one of claims 1 to 12.
